# EUROPÄISCHE PATENTSCHRIFT

(11) **EP 1 348 900 B1**
(45) Veröffentlichungstag und Bekanntmachung des Hinweises auf die Patenterteilung: **05.07.2006**
(21) Anmeldenummer: 03450074.4
(22) Anmeldetag: 25.03.2003
(51) Int. Cl.: F16K 17/30

(54) **Rohrbruchventil **
Excess flow valve
Soupape d'excédent de debit

(30) Priorität: 26.03.2002 AT 4692002
(43) Veröffentlichungstag der Anmeldung: 01.10.2003
(73) Patentinhaber: Weber, Walter, 851 10 Bratislava, Jarovce (SK)
(72) Erfinder: Weber, Walter, 851 10 Bratislava, Jarovce (SK)
(74) Vertreter: Fischer, Michael

(56) Entgegenhaltungen:
- WO-A-02/16813
- DE-C- 855 186

## Beschreibung

Die Erfindung betrifft ein Rohrbruchventil, mit einem Ventilgehäuse, das eine im wesentlichen zylindrische Gehäusebohrung aufweist, die durch einen Ventilteller verschließbar ist, welcher von einem zentralen Schaft getragen und von einer diesen umgebenden Ventilfeder in die Offenstellung vorgespannt ist, und mit einem zylindrischen Einsatzkörper, der in einem Absatz der Gehäusebohrung beweglich angeordnet und als im Querschnitt zahnradförmiger Körper mit kreisförmigen Zahnlücken ausgebildet ist, welche mit der Bohrungswand die Ventildurchgänge bilden, wobei der Ventiltellerschaft ausgehend von einem Kopf den Einsatzkörper durchsetzt, einstückig ausgebildet und an der Außenseite des Ventiltellers mit einer einstellbaren Sicherungsmutter versehen ist, wobei ferner der Ventilteller mit seinem Kegelrand an der stirnseitigen Kante der Gehäusebohrung angreifen kann, und wobei das dem Ventilteller abgekehrte Ende des Ventilkörpers mit einem Außengewindeabschnitt und einem Innenkonus der Gehäusebohrung versehen ist, in welchen im eingebanten Zustand ein konischer Schneidring eingreifen kann, der ein Anschlußrohr umgibt und von einer auf den Gewindeabschnitt aufgeschraubten Mutter in Eingriff mit dem Innenkonus gehalten werdem kann.

Aus der WO 02/16813 ist ein Ventil dieser Art bekannt, bei welchem die Gehäusebohrung von zwei Seiten her bearbeitet werden muß, um den Innenkonus der Ventilgehäusebohrung und den Absatz zur Aufnahme des Einsatzkörpers auszubilden, was zeit- und kostaufwendig ist und eine automatische Herstellung erschwert. Zudem ist ein Sprengring erforderlich, um den Einsatz korper im Absatz fertzuhalten, da dieser sonst in Richtung des Ventiltellers nicht arretiert ist.

Die Erfindung zielt darauf ab, diese Nachteile zu beheben, und erreicht dies bei einem Ventil der einleitend angegebenen Art dadurch, daß der Absatz der Gehäusebohrung in den Innenkonus derselben übergeht, so daß wenn im Innenkonns (5''') ein Auschlussrohr (R) augebracht ist, der in Absatz (5') angebrachte Einsatzkörper mit Vorbestimmten Axialspiel beweglich bis zum Anschlußrohr angeordnet ist.

Durch die erfindungsgemäße, insgesamt aus wenigen Teilen bestehende einfache Konstruktion wird eine Bearbeitung des Gehäuses nur von einer Gehäusestirnseite her notwendig, weil die Ventildurchgänge in einem gesonderten Einsatzkörper ausgeführt sind und je nach den Bedürfnissen entsprechend unterschiedliche Einsatzkörper mit verschieden großen Durchgängen eingesetzt werden können, und weil der den Einsatzkörper aufnehmende Absatz von dem gleichen Gehäuseende her wie der Innenkonus ausgebildet werden kann, so daß eine automatische Herstellung der Gehäusekörper von einem Stangenmaterial, insbesondere aus Stahl oder einer Stahllegierung möglich ist. Ein besonderer Vorteil der erfindungsgemäßen Konstruktion besteht ferner darin, daß der Einsatzkörper Axialspiel hat, so daß er unter dem Druck der von der Pumpe zuströmenden Flüssigkeit vom Anschlußrohr her in eine Anschlagstellung bewegt wird, in welcher der Ventildurchflußquerschnitt vergrößert wird.

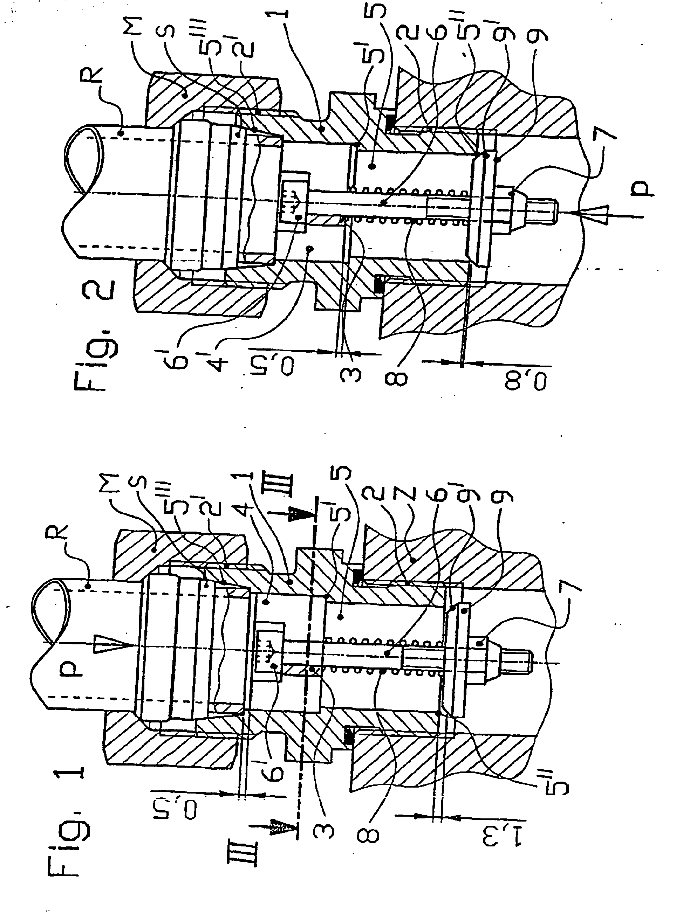

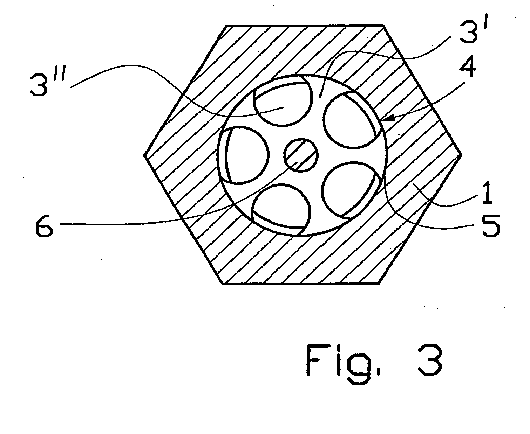

Die Erfindung wird nachfolgend an Ausführungsbeispielen unter Bezugnahme auf die Zeichnung näher erläutert. Es zeigen: Fig. 1 und 2 Axialschnitte durch ein erfindungsgemäßes Ventil in der Offenstellung und Fig. 3 einen Schnitt nach der Linie III-III in Fig. 1.

Das dargestellte erfindungsgemäße Rohrbruchventil hat ein zylindrisches Ventilgehäuse 1 aus Stahl oder einer Stahllegierung, das als Einschraubgehäuse mit einem Außengewindeabschnitt 2 an dem einen und einem Außengewindeabschnitt 2' an dem anderen Ende versehen ist. Gemäß Fig. 1 ist das Ventilgehäuse mit seinem Gewindeabschnitt 2 z.B. in einen Hydraulik-Hubzylinder Z eingeschraubt. In einem in einem Absatz 5' der Gehäusebohrung 5 beweglich angeordneten Ventileinsatzkörper 3, insbesondere aus Aluminium oder Kunststoff, sind auf einem Kreis nebeneinander Durchgänge 4 für das Hydraulikmedium ausgebildet. Der Ventileinsatzkörper 3 wird von einem Ventiltellerschaft 6 mit Schraubgewinde durchsetzt, der einen Ventilteller 9 trägt und an der Innenseite des Einsatzkörpers 3 mit einem Schraubenkopf 6' angreift sowie am Ventilteller 9 mittels einer Einstell-Sicherungsmutter 7 einstellbar festgelegt ist. Der Ventiltellerschaft 6 trägt eine am Einsatzkörper 3 angreifende Ventilfeder 8, die am Ventilteller 9 endet, welcher im Ruhezustand von der Stirnseite des Gehäuses 1 einen vorbestimmten Abstand hat und einen kegelförmigen Verschlußrand 9' aufweist, der bei einem Rohrleitungsbruch auf der Zuströmseite (Pfeil P) an der stirnseitigen Kante 5" der Gehäusebohrung 5 unter dem der Druckfeder 8 entgegenwirkenden Mediumdruck, z.B. aus dem Hydraulik-Hubzylinderz, abdichtend angreift.

Der im Absatz 5' der Gehäusebohrung 5 angeordnete Ventileinsatzkörper 3 hat gemäß Fig. 3 im wesentlichen zylindrische und im Querschnitt zahnradförmige Gestalt mit Zähnen 3' und Zahnlücken 3", die kreisförmige Kontur haben und mit der Bohrungswand die Ventildurchgänge 4 bilden.

Bei der in den Fig. 1 und 2 dargestellten Ausführungsform kann für den Einsatz an dem Ventilteller 9 abgekehrten Ende des Ventilkörpers 1 ein Rohr R eingesetzt werden, das an seiner Außenseite von einem konischen Schneidring S umgeben ist, der in einen Innenkonus 5''' der Gehäusebohrung 5 eingreift. Das Rohr R und der Schneidring S können mit Hilfe einer Mutter M an dem Gewinde 2' des Ventilkörpers 1 festgeschraubt. Diese Konstruktion verhindert, daß Lecköl aus dem Ventil z.B. über das Gewinde 2', austritt.

Gemäß der Fig. 1 hat beispielsweise der Einsatzkörper 3 von der ihm zugekehrten Stirnseite eines Anschlußrohres R einen vorbestimmten Abstand bzw. axialen Bewegungsspielraum von 0,5 mm unter Strömungsdruck in Richtung des Pfeiles P (von der Pumpe). Unter dem zuströmenden Fluid liegt der Einsatzkörper 3 am Absatz 5' an, wodurch der Durchflussquerschnitt zwischen Ventiltellerrand 9' und Kante 5" vergrößert wird.

Gemäß Fig. 2 wird beim Rückfluss des Mediums aus den Zylinder Z in Richtung Pumpe der Einsatzkörper 3 unter dem Druck des Strömenden Mediums axial in eine Anschlagstellung am Stirnende des Rohres R bewegt, wodurch der Spalt zwischen dem Ventilteller 9 und der Kante 5" beispielsweise von 1,3 mm in Fig. 1 auf z.B. 0,8 mm in Fig. 2 verkleinert wird.

In diesem normalen Gebrauch ist die Kraft in Pfeilrichtung P auf den Ventilteller, bedingt durch die Druckdifferenz beidseitig des Ventils, geringer ist als die dazu entgegenwirkende Federkraft der Ventilfeder 8, sodass die Spaltöffnung gewährleistet ist.

Bei einem Bruch des Rohres R drückt aber der hohe Differenzdruck derart auf den Ventilteller 9, dass die Ventilfeder 8 zusammengedrückt wird und der Ventilteller 9 abdichtend an der Kante 5" des Ventilgehäuses 1 angreift.

Im Gegensatz zum Ventil aus der WO 02/16813 kann beim erfindungsgemässen Ventil auf einen Sprengring als zweiten Anschlag des Ventileinsatzkörpers 3, gegenüber vom Absatz 5', verzichtet werden. Dies ist durch die erfindungsgemässe Konstruktion gegeben, da, wie in Fig. 2 ersichtlich, das beim Einsatz des Ventils angeschlossene Rohr R die Funktion dieses zweiten Anschlages des Ventileinsatzkörpers 3 erfüllt.

## Patentansprüche

1. Rohrbruchventeil mit einem Ventilgehäuse (1), das eine im wesentlichen zylindrische Gehäusebohrung (5) aufweist, die durch einen Ventilteller (9) verschließbar ist, welcher von einem zentralen Schaft (6) getragen und von einer diesen umgebenden Ventilfeder (8) in die Offenstellung vorgespannt ist, und mit einem im Gehäuseinnenraum (5) angeordneten zylindrischen Einsatzkörper (3), der in einem Absatz (5') der Gehäusebohrung (5) beweglich angeordnet und als im Querschnitt zahnradförmiger Körper mit kreisförmigen Zahnlücken (3") ausgebildet ist, welche mit der Gehäuseinnenwand die Ventildurchgänge (4) bilden, wobei der Ventiltellerschaft (6) ausgehend von einem Kopf (6') den Einsatzkörper (3) durchsetzt, einstückig ausgebildet und an der Außenseite des Ventiltellers (9) mit einer einstellbaren Sicherungsmutter (7) versehen ist, wobei ferner der Ventilteller (9) mit seinem Kegelrand (9') an der stirnseitigen Kante (5") des Gehäuseinnenraumes (5) angreifen kann, und wobei das dem Ventilteller (9) abgekehrte Ende des Ventilkörpers (1) mit einem Außengewindeabschnitt (2') und einem Innenkonus (5''') der Gehäusebohrung (5) versehen ist, in welchen im eingebanten Zustand ein konischer Schneidring (S) eingreifen kann, der ein Anschlußrohr (R) umgibt und von einer auf den Gewindeabschnitt (2') aufgeschraubten Mutter (M) in Eingriff mit dem Innenkonus (5''') gehalten werden kann, **dadurch gekennzeichnet, daß** der Absatz (5') der Gehäusebohrung (5) in den Innenkonus (5''') derselben übergeht, so daß, wenn im Innenkonns (5''') ein Anschlussrohr (R) eingreift, der im Absatz (5') angebrachte Einsatzkörper (3) mit Vorbestimmtem Axialspiel (A) beweglich bis zum Anschlußrohr (R) angeordnet ist.

2. Rohrbruchventil gemäss Anspruch 1, **dadurch gekennzeichnet, dass** das Ventilgehäuse (1) aus Stahl oder einer Stahllegierung ist.

3. Rohrbruchventil gemäss einem der Ansprüche 1 bis 2, **dadurch gekennzeichnet, dass** der Einsatzkörper (3) aus Aluminium oder Kunststoff ist.

## Claims

1. An automatic shut-off valve with a valve housing (1) which comprises an essentially cylindrical housing bore (5) which may be closed by way of a valve disk (9) which is carried by a central shank (6) and is biased into the open position by a valve spring (8) surrounding this, and with a cylindrical insert body (3) which is arranged in the housing interior (5), and which is movably arranged in a shoulder (5') of the housing bore (5), and which is designed as a body which is cog-like in cross section with circular tooth gaps (3"), said tooth gaps with the housing inner wall forming the valve passages (4), wherein the valve disk shank (6), proceeding from a head (6'), passes through the insert body (3), and is designed as one piece, and is provided with an adjustable securing nut (7) on the outer side of the valve disk (9), wherein furthermore the valve disk (9) with its conical edge (9') may engage on the end-face edge (5") of the housing interior (5), and wherein the end of the valve body (1) which is distant to the valve disk (9) is provided with an outer threaded section (2') and an inner cone (5''') of the housing bore (5), into which in the fitted condition, a conical cutting ring (S) may engage, said cutting ring surrounding a connection tube (R) and capable of being held in engagement with the inner cone (5''') by a nut (M) which is screwed onto the threaded section (2'), **characterised in that** the shoulder (5') of the housing bore (5) merges into the inner cone (5''') of this, so that when the inner cone (5''') engages a connection tube (R), the insert body (3) attached in the shoulder (5') is arranged with predefined axial play (A) movable up to the connection tube (R).

2. An automatic shut-off valve according to claim 1, **characterised in that** the valve housing (1) is of steel or a steel alloy.

3. An automatic shut-off valve according to one of the claims 1 to 2, **characterised in that** the insert body (3) is of aluminium or plastic.

## Revendications

1. Soupape d'arrêt automatique avec un boîtier de soupape (1) qui présente un alésage de boîtier (5) essentiellement cylindrique, lequel est susceptible d'être fermé par une tête de soupape (9) qui est soutenue par une tige (6) centrale et qui est précontrainte dans la position ouverte par un ressort de soupape (8) l'entourant, et avec un corps d'insertion (3) cylindrique qui est agencé à l'intérieur du boîtier (5) et qui est agencé de façon à être mobile dans un épaulement (5') de l'alésage de boîtier (5) et qui est formé, dans la coupe transversale, comme un corps en forme de roue dentée avec des entredents (3") circulaires, lesquels forment, avec la paroi intérieure du boîtier, les passages de soupape (4), la tige de la tête de soupape (6) traversant, à partir d'une tête (6'), le corps d'insertion (3), étant formée en une seule pièce et étant pourvue, à l'extérieur de la tête de soupape (9), d'un écrou de blocage (7) réglable, de plus la tête de soupape (9) avec son bord conique (9') pouvant saisir le rebord (5") frontal de l'intérieur du boîtier (5) et l'extrémité du corps de soupape éloignée de la tête de soupape (9) étant pourvue d'une section de filetage mâle (2') et d'un cône intérieur (5''') de l'alésage de boîtier (5), dans lequel, dans l'état monté, une bague coupante (S) conique peut s'engrener, laquelle entoure un tuyau de raccordement (R) et peut être maintenue en engrènement avec le cône intérieur (5"') par un écrou (M) vissé sur la section de filetage (2'), **caractérisé en ce que** l'épaulement (5') de l'alésage de boîtier (5) se raccorde dans le cône intérieur (5"') de celui-ci même, de sorte que, si un tuyau de raccordement (R) s'engrène dans le cône intérieur (5"'), le corps d'insertion (3) appliqué à l'épaulement (5') est agencé de façon à être mobile, avec un jeu axial (A) prédéfini, jusqu'au tuyau de raccordement (R).

2. Soupape d'arrêt automatique selon la revendication 1, **caractérisée en ce que** le boîtier de soupape (1) est en acier ou en alliage d'acier

3. Soupape d'arrêt automatique selon une des revendications de 1 à 2, **caractérisée en ce que** le corps d'insertion (3) est en aluminium ou en matière synthétique.
